# EUROPÄISCHE PATENTSCHRIFT

(11) **EP 3 145 032 B1**
(45) Veröffentlichungstag und Bekanntmachung des Hinweises auf die Patenterteilung: **12.06.2019**
(21) Anmeldenummer: 15306463.9
(22) Anmeldetag: 21.09.2015
(51) Int. Cl.: H01R 4/72, H01R 9/05

(54) **ANORDNUNG MIT EINER ELEKTRISCHEN LEITUNG UND EINEM ELEKTRISCHEN KUPPLUNGSTEIL**
ASSEMBLY HAVING AN ELECTRIC LINE AND AN ELECTRICAL COUPLING PART
SYSTEME DOTE D'UN CABLE ELECTRIQUE ET D'UN ELEMENT DE COUPLAGE ELECTRIQUE

(43) Veröffentlichungstag der Anmeldung: 22.03.2017
(73) Patentinhaber: Nexans, 92400 Courbevoie (FR)
(72) Erfinder: KOEPPL, Joachim, 92665 ALTENSTADT (DE); STEINBERG, Helmut, 92721 Störnstein (DE)
(74) Vertreter: Lenne, Laurence

(56) Entgegenhaltungen:
- WO-A1-95/16291
- DE-A1- 1 465 170
- DE-A1-102004 007 357
- US-A- 4 804 338
- US-B1- 6 623 315

## Beschreibung

Die Erfindung bezieht sich auf eine Anordnung gemäß dem Oberbegriff des Patentanspruchs 1.

Eine derartige Anordnung geht beispielsweise aus der DE 32 42 073 C2 hervor.

Eine solche Anordnung dient zur Übertragung von elektrischem Strom oder auch von Signalen zwischen zwei elektrischen Geräten. Für einen störungsfreien Betrieb der Anordnung ist es erforderlich, daß der Schirm der Leitung nicht nur in deren Verlauf, sondern bis in die Geräte hinein geschlossen ist. "Störungsfrei" bedeutet dabei, dass einerseits von der Leitung keine Störsignale ausgehen und dass andererseits keine Störsignale von außen in die Leitung eingetragen werden können (EMV-Schutz).

Aus der US 4,804,338 A geht eine Durchführung für eine elektrische Leitung hervor, mittels derer die Leitung an ein elektrisches Gerät angeschlossen werden kann. Die Leitung ist von einem Schirm umgeben. Der Schirm ist an einen aus Metall bestehenden, vierstufigen Profilkörper angeschlossen, der an einem Ende als erste Stufe eine Anlagefläche für ein drehbares Kupplungselement hat. Es folgen als zweite Stufe eine umlaufende Erweiterung, als dritte Stufe ein daran anschließendes Gewindeteil und als vierte Stufe ein daran anschließendes, im Durchmesser reduziertes Ende. Das reduzierte Ende hat in einer Vertiefung einen radial abstehenden Vorsprung. Der Schirm der Leitung ist in Montageposition auf dem im Durchmesser reduzierten Ende des Profilkörpers durch ein Band festgelegt, das um den Schirm herumgewickelt ist. Der Profilkörper ist mit Abstand von einem durch Wärmezufuhr schrumpfbaren, mit einem Dichtmaterial beschichteten Schlauch umgeben. Innen ist an dem Schlauch ein ringförmiges Gewindestück angebracht, auf welches der Schlauch aufgeschrumpft und dadurch fest mit demselben verbunden ist. Der Schlauch wird zur Montage über dem Profilkörper und der Leitung mittels des Gewindestücks auf den Gewindeteil des Profilkörpers aufgeschraubt. Abschließend werden die beiden Enden des Schlauchs auf die Leitung einerseits sowie auf den Profilkörper und das drehbare Kupplungselement andererseits aufgeschrumpft.

Die DE 14 65 170 A1 beschreibt eine elektrische Kupplung für abgeschirmte Kabel, die zwei auf einander abgepasste Kupplungshälften aufweist. Jede der beiden Kupplungshälften hat an ihrem hinteren Ende einen Fortsatz. An der Außenseite des Fortsatzes sind V-förmige Rillen angebracht, die in Spiralform in entgegengesetzter Richtung verlaufen. Sie bilden eine geriffelte Oberfläche. Auf dem Fortsatz liegt in Montageposition ein Abschirmmantel auf, der von einer zylindrischen Zwinge aus verformbarem Material umschlössen ist. Die Zwinge besteht aus hart gezogenem geglühtem Kupfer. Sie wird mit einem kreisförmigen Querschnitt angedrückt. Durch diesen Andrückvorgang wird der Abschirmmantel in die Nuten bzw. Rillen des Fortsatzes eingedrückt.

Aus der eingangs erwähnten DE 32 42 073 C2 geht eine Anordnung hervor, bei welcher das Kupplungsteil als Durchführung für eine geschirmte elektrische Leitung ausgeführt ist. Die aus Metall bestehende Durchführung hat einen Ansatz mit einer zylindrischen Umfangsfläche, auf welcher der als Geflecht ausgeführte Schirm der Leitung in Montageposition aufliegt. Er wird dabei durch eine Quetschhülse rundum an den Ansatz der Durchführung angepreßt. Weitere Maßnahmen zur Festlegung des Schirms sind nicht vorgesehen. Erschütterungen und Vibrationen, wie sie beispielsweise beim Betrieb von Kraftfahrzeugen auftreten, können dazu führen, dass der Schirm von der Durchführung so weit gelöst wird, dass eine durchgehende Schirmung nicht gewährleistet ist.

Der Erfindung liegt die Aufgabe zugrunde, die eingangs geschilderte Anordnung so zu gestalten, dass eine feste Verbindung von Schirm und Kontaktträger auf Dauer sichergestellt ist.

Diese Aufgabe wird entsprechend den kennzeichnenden Merkmalen des Patentanspruchs 1 gelöst.

Bei dieser Anordnung ist der Schirm bereits durch die stiftartigen Vorsprünge, welche in den Schirm eingreifen, am Gehäuse des Kontaktträgers befestigt und zugfest festgelegt. Diese Position wird durch den aus bei Wärmezufuhr schrumpfendem Material bestehenden Schlauch auf Dauer fixiert, welcher nach dem Schrumpfen mit entsprechender Reduzierung seines Durchmessers fest am Schirm anliegt und denselben an den Kontaktträger andrückt. Durch das Zusammenwirken von Vorsprüngen und Schlauch ist der Schirm so fest und unverrückbar am Kontaktträger befestigt, dass er auch bei Erschütterungen und Vibrationen seine Position beibehält, wie sie beispielsweise beim Betrieb von Kraftfahrzeugen auftreten. Der Kontaktträger ist dabei ein Bauteil, das mindestens ein elektrisches Kontaktelement zum Anschluß eines Leiters einer elektrischen Leitung aufweist. Die Vorsprünge sind in ausreichender Anzahl über die ganze Umfangsfläche verteilt auf dem Stutzen des Kontaktträgers angebracht.

Mit Vorteil sind die stiftartigen Vorsprünge in Form von Widerhaken ausgeführt. Dadurch ist ihre Haltewirkung für den Schirm verbessert.

Ein Ausführungsbeispiel des Erfindungsgegenstandes ist in den Zeichnungen dargestellt.

Es zeigen:
Fig. 1 in schematischer Darstellung eine zwischen zwei elektrischen Geräten angeordnete elektrische Leitung.
Fig. 2 einen Schnitt durch die Leitung nach Fig. 1 in vergrößerter Darstellung.
Fig. 3 ein Ende der Leitung nach Fig. 2 mit absatzweise entfernten Schichten.
Fig. 4 einen Kontaktträger.
Fig. 5 die Anordnung nach der Erfindung in einer Zwischenposition bei ihrer Herstellung.
Fig. 6 eine fertige Anordnung nach der Erfindung.

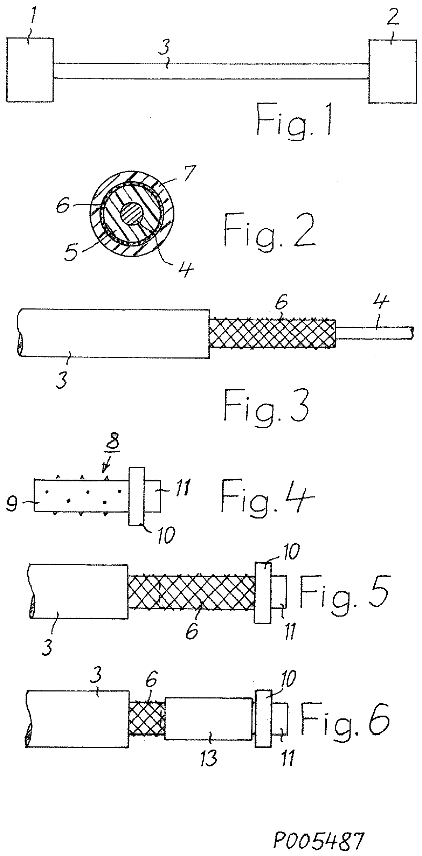

In Fig. 1 sind zwei elektrische Geräte 1 und 2 schematisch angedeutet, die durch eine elektrische Leitung 3 miteinander verbunden sind. Bei den Geräten 1 und 2 kann es sich mit Vorteil um eine Energiequelle und einen Wechselrichter handeln, die in einem Kraftfahrzeug angeordnet sind. Die Leitung 3 hat in dem dargestellten Ausführungsbeispiel einen elektrischen Leiter 4, der beispielsweise aus Kupfer oder Aluminium besteht. Der Leiter 4 ist von einer Isolierung 5 umgeben, über welcher ein mit Vorteil als Geflecht ausgeführter, flexibler Schirm 6 angebracht ist. Über dem Schirm 6 ist ein Mantel 7 aus Isoliermaterial angeordnet, der beispielsweise aus Polyvinylchlorid besteht. Der flexible Schirm 6 besteht vorzugsweise aus Kupfer.

Die Leitung 3 ist in Montageposition zumindest an einem Ende an ein Kupplungsteil angeschlossen, das einen als rohrförmiges Gehäuse ausgeführten Kontaktträger 8 aufweist, der schematisch in Fig. 4 dargestellt ist. Er besteht aus Metall, vorzugsweise aus Edelstahl, und weist einen Stutzen 9, einen Flansch 10 und einen Ansatz 11 auf. Mittels des Ansatzes 11 kann der Kontaktträger 8 beispielsweise an das Gerät 2 elektrisch leitend angeschlossen werden.

Auf der äußeren Umfangsfläche der Stutzens 9 sind voneinander getrennte stiftartige Vorsprünge 12 angebracht, die in radialer Richtung vom Stutzen 9 abstehen. Die Vorsprünge 12 sind mit Vorteil rundum um den Stutzen 9 angebracht. Sie können vorzugsweise die Form von Widerhaken aufweisen.

Zur Verbindung der Leitung 3 mit dem Kontaktträger 8 wird das Ende der Leitung 3 entsprechend Fig. 3 vorbereitet. Der Leiter 4 mit darüber befindlicher Isolierung wird dann in den Kontaktträger 8 eingeführt, und der Leiter 4 wird mit einem im Kontaktträger 8 vorhandenen Kontaktelement elektrisch leitend verbunden. Der Schirm 6 wird außen um den Stutzen 9 herumgelegt. Dabei dringen die Vorsprünge 12 in den Schirm 6 ein, so daß derselbe auf dem Stutzen 9 festgelegt ist, und zwar insbesondere zugfest. Diese Position der Anordnung geht aus Fig. 5 hervor.

Zur Fertigstellung der Anordnung wird abschließend ein Schlauch 13 im Bereich des Stutzens 9 um den Schirm herumgelegt, der aus einem bei Wärmezufuhr schrumpfenden Material besteht. Durch Wärmezufuhr wird der Schlauch 13 dann bis zur festen Anlage am Schirm 6 im Durchmesser reduziert. Dabei wird der Schirm 6 in der Endposition des Schlauchs 13 fest an den Stutzen 9 des Kontaktträgers 8 gedrückt.

## Patentansprüche

1. Anordnung mit einer elektrischen Leitung und einem elektrischen Kupplungsteil, bei welcher die in Montageposition an das Kupplungsteil angeschlossene Leitung mindestens einen isolierten elektrischen Leiter hat, der von einem flexiblen elektrischen Schirm (6) umgeben ist, bei welcher das Kupplungsteil einen als rohrförmiges Gehäuse aus Metall ausgebildeten Kontaktträger (8) aufweist und bei welcher das Gehäuse einen Stutzen (9) mit einer äußeren Umfangsfläche hat, auf welcher der Schirm (6) in Montageposition aufliegt, **dadurch gekennzeichnet,**
- **dass** auf der äußeren Umfangsfläche des Stutzens (9) des Kontaktträgers (8) voneinander getrennte und radial nach außen abstehende stiftartige Vorsprünge (12) angebracht sind, welche über den Umfang des Stutzens (9) verteilt auf demselben angebracht sind und in Montageposition in den Schirm (6) eingreifen, und
- **dass** in Montageposition über dem Schirm (6) im Bereich des Stutzens (9) des Kontaktträgers (8) ein aus einem bei Wärmezufuhr schrumpfenden Material bestehender Schlauch (13) angebracht ist, der in seiner Endposition fest am Schirm (6) anliegt.

2. Anordnung nach einem der Ansprüche 1 bis 3, **dadurch gekennzeichnet, dass** der Schirm (6) als Geflecht ausgeführt ist.

3. Anordnung nach Anspruch 1, **dadurch gekennzeichnet, dass** die Vorsprünge (12) in Form von Widerhaken ausgeführt sind.

## Claims

1. An arrangement with an electrical line and an electrical coupling part, in which the line connected in the mounting position to the coupling part has at least one insulated electrical conductor, which is surrounded by a flexible electrical screen (6), in which the coupling part has a contact carrier (8) designed as a tubular housing made of metal and in which the housing has a connecting piece (9) with an outer circumferential surface, against which the screen (6) abuts in the mounting position, **characterized in**
- **that** pin-like projections (12) separated from one another and protruding radially outwardly are mounted on the outer circumferential surface of the connecting piece (9) of the contact carrier (8), which projections distributed over the circumference of the connecting piece (9) are mounted on the same and in the mounting position engage in the screen (6), and
- **that** in the mounting position a hose (13) consisting of a shrinking material when heat is supplied is mounted over the screen (6) in the area of the connecting piece (9) of the contact carrier (8), which hose in its end position abuts firmly against the screen (6).

2. An arrangement according to any one of Claims 1 to 3, **characterized in that** the screen (6) is designed as a mesh.

3. An arrangement according to Claim 1, **characterized in that** the projections (12) are designed in the form of barbs.

## Revendications

1. Dispositif avec une ligne électrique et une partie de couplage électrique, dans lequel la ligne, raccordée à la partie de couplage dans la position de montage, comprend au moins un conducteur électrique isolé, qui est entouré d'un blindage électrique flexible (6), dans lequel la partie de couplage comprend un support de contact (8) conçu comme un boîtier en métal de forme tubulaire et dans lequel le boîtier comprend un embout (9) avec une surface circonférentielle externe sur laquelle le blindage (6) s'appuie dans la position de montage, **caractérisé en ce que**
- sur la surface circonférentielle externe de l'embout (9) du support de contact (8), sont montées des saillies (12) en forme de broches, séparées entre elles et s'écartant radialement vers l'extérieur, qui sont montées de manière répartie sur la circonférence de l'embout (9) et qui s'emboîtent dans le blindage (6) en position de montage et
- en position de montage, au-dessus du blindage (6), au niveau de l'embout (9) du support de contact (8), est monté une gaine (13) constituée d'un matériau thermorétractable, qui s'appuie fermement contre le blindage (6) dans sa position finale.

2. Dispositif selon l'une des revendications 1 à 3, **caractérisé en ce que** le blindage (6) est conçu comme un treillis.

3. Dispositif selon la revendication 1, **caractérisé en ce que** les saillies (12) sont conçues sous la forme de barbillons.
